# EUROPÄISCHE PATENTSCHRIFT

(11) **EP 1 401 747 B1**
(45) Veröffentlichungstag und Bekanntmachung des Hinweises auf die Patenterteilung: **15.07.2009**
(21) Anmeldenummer: 02753063.3
(22) Anmeldetag: 29.05.2002
(51) Int. Cl.: B65G 53/46

(54) **DOSIERVORRICHTUNG**
DOSING DEVICE
DISPOSITIF DE DOSAGE

(30) Priorität: 30.05.2001 DE 10126232
(43) Veröffentlichungstag der Anmeldung: 31.03.2004
(73) Patentinhaber: Schenck Process GmbH, 64293 Darmstadt (DE)
(72) Erfinder: HEINRICI, Harald, 38170 Kneitlingen (DE); AHLMER, Peter, 64521 Wallerstädten (DE); MÜLLER, Robert, 88718 Daisendorf (DE); KAHLE, Jens, 63303 Dreieich (DE)
(74) Vertreter: Behrens, Helmut
(86) Internationale Anmeldenummer: PCT/EP2002/005915
(87) Internationale Veröffentlichungsnummer: WO 2002/096787

(56) Entgegenhaltungen:
- DE-A- 19 602 227
- FR-A- 387 793
- GB-A- 1 580 507
- US-A- 6 123 486

## Beschreibung

Die Erfindung betrifft eine Vorrichtung zum Dosieren von Schüttgütern gemäß dem Oberbegriff des Patentanspruchs 1.

Bei Dosiervorrichtungen für Schüttgüter sind meist Vorratsbehälter vorgesehen, aus denen insbesondere bei schlecht fließenden Schüttgütern diese häufig mit Hilfe von Rührwerken aus dem Behälter ausgetragen werden. Bei Dosiervorrichtungen für kleine Schüttgutströme sind Horizontalrührwerke unvorteilhaft, da nur ein Teil des Behältervolumens aktiviert wird, so daß bei schlecht fließenden Schüttgütern vermehrt Wartungs- und Reinigungsarbeiten notwendig sind. Durch die kleinen Behälterabmessungen bei Dosiervorrichtungen für kleine Schüttgutströme ergibt sich bei vertikalen Rührwerken häufig das Problem, daß bei obenliegenden Rührwerksantrieben nicht ausreichend Platz für eine Gerätenachfüllung zur Verfügung steht.

Aus der DE 195 01 179 A1 ist eine Vorrichtung zum Dosieren von Schüttgütern bekannt, die eine Zellenradschleuse darstellt. Diese Zellenradschleuse verfügt über einen Schüttgutbehälter, in dem ein Vertikalrührwerk angeordnet ist. Das Rührwerk besitzt einen untenliegenden Antrieb, der durch eine zentrale vertikale Antriebswelle das Rührwerk antreibt. Dieses besteht aus horizontalen Rührwerksflügeln und -schaufeln, die an einer zentralen vertikalen Rührwerksnabe befestigt sind. Im Bereich des Behälterbodens enthält die Rührwerksnabe eine Steckkupplung, mit der der Schüttgutbehälter samt Rührwerksnabe auf die Antriebswelle aufgesetzt wird und eine kraftschlüssige Drehverbindung herstellt. Dabei läuft die Rührwerksnabe am Boden des Schüttgutbehälters in einem Drehlager, das im Betriebszustand vom Schüttgutvorrat umgeben ist. Derartige Lager sind in der Praxis wegen des Schüttgutdrucks nur sehr schwer gegen eindringende Schüttgutpartikel zu schützen, so daß dadurch leicht Lagerschäden entstehen können.

Der Erfindung liegt deshalb die Aufgabe zugrunde, eine Dosiervorrichtung für Schüttgüter zu schaffen, die weitgehend verschleißfrei arbeitet und dies unter einfachster Ausgestaltung.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch das Vertikalrührwerk auch bei schwer fließenden Schüttgütern alle Behälterbereiche vom Rührwerk erfaßbar sind, so daß kaum Schüttgutrückstände über längere Zeit im Behälter verbleiben und sich nicht besonders verfestigen oder altern können. Dabei hat der Antrieb von unten den Vorteil, daß die gesamte Behälteröffnung zur Einfüllung von Schüttgütern zur Verfügung steht und der Rührwerksantrieb gegenüber Verunreinigungen durch die Schüttgüter besonders geschützt ist.

Durch die Lagerung des Rührwerkflügels oberhalb des Schüttgutvorrats hat die Erfindung weiterhin den Vorteil, daß die Rührwerkslagerung nicht dem Schüttgutdruck ausgesetzt ist und so dauerhaft vor eindringenden Schüttgutpartikeln geschützt wird. Gleichzeitig hat die Erfindung den Vorteil, daß durch die obenliegende Rührwerkslagerung die Schüttgutpartikel oder andere Verunreinigungen zusätzlich mit Hilfe der Schwerkraftwirkung aus dem Lagerbereich wegbewegbar sind, so daß ein Eindringen weitgehend verhindert werden kann, wodurch eine leichtgängige und wartungsfreie langlebige Lagerung erreichbar ist.

Bei einer besonderen Ausbildung der Erfindung wird der obere Lagerbereich des Rührwerksantriebs durch eine nach unten überlappende Abdichthaube geschützt und so auf vorteilhafte Weise eine einfache Lagerabdichtung erzielt. Diese Ausführung hat gleichzeitig den Vorteil, daß durch einfache Dichtelemente zwischen der Abdichthaube und der Antriebswellenummantelung eine staubdichte Trennung des Lagers vom Innenbehältereinfluß ermöglicht wird.

Bei einer weiteren besonderen Ausführung der Erfindung, bei der der gesamte Vorratsbehälter mit dem Dosierorgan abnehmbar ist, hat den Vorteil, daß hierdurch der Serviceaufwand verringert wird. Weiterhin kann bei einem Schüttgutwechsel der gesamte Schüttgutbehälter gegen einen weiteren Vorratsbehälter ausgetauscht werden, was vorteilhafterweise die Betriebsbereitschaft der Gesamtanlage erhöht.

Die Erfindung wird anhand eines Ausführungsbeispiels, das in der Zeichnung dargestellt ist, näher erläutert. Es zeigen:
- Fig. 1:: ein Schnittbild einer Dosiervorrichtung mit ei- nem Vorratsbehälter, und
- Fig. 2:: einen vergrößerten Ausschnitt aus dem Schnitt- bild des Vorratsbehälters mit einer abdichtenden Rührwerkslagerung.

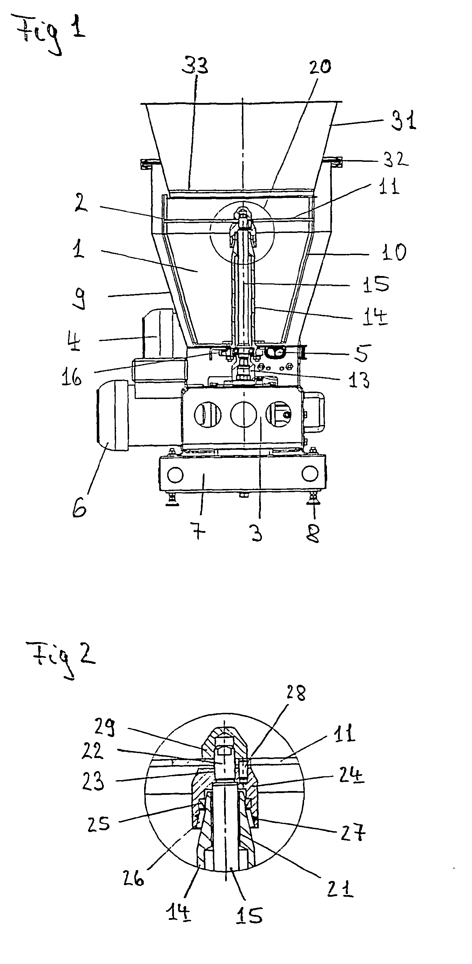

In Fig. 1 der Zeichnung ist eine Dosiervorrichtung für kleine Schüttgutmassenströme dargestellt, die aus einer abnehmbaren Vorratsbehältereinheit 1 mit einem Vertikalrührwerk 2 und einer darunter angeordneten Antriebseinheit 3 besteht.

Die Antriebseinheit 3 enthält ein Grundrahmengestell 7, an dem jeweils ein Antriebsmotor 4 für eine Austragsvorrichtung 5 und ein zweiter Antriebsmotor 6 für das Vertikalrührwerk 2 befestigt ist. Unter dem Grundrahmengestell 7 sind Aufstellfüße 8 vorgesehen, mit der die Dosiervorrichtung sowohl auf einer Stellfläche als auch auf einer Plattformwaage aufstellbar ist. Damit ist die Dosiervorrichtung sowohl als volumetrische als auch als gravimetrische Dosiervorrichtung betreibbar.

Der Antriebsmotor 6 für das Vertikalrührwerk 2 ist in der Antriebseinheit 3 horizontal angeordnet und über ein Winkelgetriebe ist ein Teil der Antriebswelle senkrecht nach oben geführt. Dabei endet diese vertikale Antriebswelle unterhalb der Vorratsbehältereinheit 1 und ist als Steckkupplung 13 ausgeführt. Diese Steckkupplung 13 verbindet den unteren Teil der Antriebswelle kraftschlüssig mit einem zweiten Teil der Antriebswelle 15 im Vorratsbehälter 9, so daß beide Antriebswellenteile lösbar ineinandergreifen. Die Vorratsbehältereinheit 1 ist mit einem Dosierorgan 5 als Austragsvorrichtung verbunden und stellt eine selbständige Baugruppe dar, die durch lösbare Verbindungselemente von der Antriebseinheit 3 nach oben leicht abnehmbar ist. Die Vorratsbehältereinheit 1 besteht im wesentlichen aus dem Vorratsbehälter 9 und dem darin angeordneten Rührwerk 2 sowie dem Dosierorgan, das als Doppelschnekkendosierer 5 ausgebildet ist. Der Doppelschneckendosierer 5 ist über eine nicht dargestellte schwenkbare Paßverbindung mit dessen Antrieb 4 verbunden und kann vor Abnahme der Vorratsbehältereinheit 1 dadurch leicht abgekoppelt werden.

Das Vertikalrührwerk 2 ist weitgehend rotationssymmetrisch im kegelstumpfförmigen Vorratsbehälter 9 angeordnet. Das Rührwerk 2 besteht aus einem dreiarmigen Außenflügel 10, deren Arme in einem Winkelabstand von 120° zueinander angeordnet sind und die an der Behälterwand entlang rotieren. Dieser vertikale Außenflügel 10 ist über drei horizontale Verbindungsarme 11 mit einem zentralen Rührwerksantrieb im Behälterinnenraum verbunden. Der Rührwerksantrieb wird im wesentlichen durch den im Behälter 9 befindlichen Teil der Antriebswelle 15 gebildet, die in einer stationären vertikalen Ummantelung angeordnet ist. Die Ummantelung ist als ein nach oben gerichteter Rohrstumpf 14 ausgebildet, der durch einen Rohrflansch unten am Behälterboden staubdicht befestigt ist. Im Bereich des Rohrflansches ist um den zweiten Anschlußwellenteil 15 ein Kugellager 16 vorgesehen, in dem das zweite Anschlußwellenteil 15 nach unten gelagert ist.

Das Ummantelungsrohr bzw. der Rohrstumpf 14 ragt mindestens bis zum oberen Drittel in den Schüttgutbehälter 9 hinein und verjüngt sich am Außenumfang des Stumpfendes. An diesem Stumpfende ist der obere Antriebswellenteil 15 nochmals gelagert und ragt aus der Ummantelung 14 etwa 50 mm hinaus. Dabei ist die vertikale Höhe der Ummantelung 14 und des oberen Antriebswellenteils 15 so bemessen, daß sie im Dosierbetrieb oberhalb der maximalen Befüllungshöhe des Dosierbehälters 9 verbleibt. Die Ummantelung 14 und der Antriebswellenteil 15 kann auch so lang gewählt werden, daß sie nach oben aus dem Vorratsbehälter 9 hinausragt, sofern dies aus konstruktiven Gründen möglich ist. Da die Dosiervorrichtung im volumetrischen oder gravimetrischen Dosierbetrieb in der Regel nur zwischen zwei vorgegebenen Füllstandshöhen betrieben wird, ragt die vorgesehene obere Rührwerkslagerung stets aus der oberen Schüttgutschicht heraus, so daß sie nicht dem Schüttgutdruck ausgesetzt wird.

Die nähere Ausgestaltung der oberen Rührwerkslagerung ist in Fig. 2 der Zeichnung als vergrößerter Ausschnitt des Kreissegments 20 in Fig. 1 der Zeichnung dargestellt. Dabei ist das leicht verjüngende Ende des Ummantelungsrohrstumpfs 14 innen als Gleitlager 21 für den oberen Antriebswellenteil 15 ausgebildet. Die aus der Ummantelung 14 herausragende Drehdurchführung 22 der oberen Antriebswelle 15 ist auf zwei gegenüberliegenden Seiten abgeflacht und dient als Passung zur Mitnahme des dreiteiligen Rührwerksflügels 11, 10, der in seinem Zentrum eine entsprechende Paßbohrung enthält.

Unterhalb der horizontalen Arme 11 des Rührflügels ist eine Abdichthaube 24 vorgesehen, die im oberen Teil an der Drehdurchführung 22 ebenfalls eine Paßbohrung für die Antriebswelle 15 besitzt und mit der Welle 15 umläuft. Nach unten ist die Abdichthaube 24 innen offen und enthält eine ringförmige Erweiterung, in die ein Dichtelement 25, vorzugsweise eine trokkenlaufgeeignete PTFE (Teflon) Wellendichtung vorgesehen ist. Unterhalb des Dichtelements 25 ist noch ein Spaltbereich 26 ausgespart, dessen Spaltbreite auf die zu dosierenden Schüttgüter abstimmbar ist. Bei staubförmigen Schüttgütern ist eine Spaltbreite von ca. 0,5 mm und bei Granulaten eine Spaltbreite von ca. 3 mm vorteilhaft. Zusätzlich ist im Spaltbereich 26 noch ein Rückfördergewinde 27 als Linksgewinde vorgesehen, durch das die Schüttgutpartikel selbsttätig nach unten aus dem Spalt 27 abgeführt werden. Da die Abdichthaube 24 die Ummantelung 14 nach außen überdeckt, ist das obere Gleitlager 21 von außen staubgeschützt, so daß keine Schüttgutpartikel in den Lagerbereich eindringen können und dies insbesondere auch deshalb, weil kein Schüttgutdruck auf den Dichtring 25 einwirkt. Das Verschleißproblem direkt mit Schüttgut beaufschlagter Dichtringe wird dadurch nahezu vollständig beseitigt.

Am oberen Abschlußende der Antriebswelle 15 ist zur vertikalen Fixierung des Rührwerkes 2 noch ein Klemmstück 29 und eine Fixierschraube 28 vorgesehen. Dabei wird das Klemmstück 29 vorzugsweise auf die Wellenspitze aufgeklemmt oder durch ein Gewinde auf der Antriebswelle 15 befestigt. Die Antriebswelle wird dadurch gleichzeitig auch von oben abgedichtet und gegen Abrieb geschützt. Die Abdichthaube 24 und das Klemmstück 29 können aus Metall oder bei wenig Abrieb verursachenden Schüttgütern auch aus Kunststoff bestehen.

Oberhalb des Vorratsbehälters 9 ist zur besseren Befüllung noch ein Fülltrichter 31 angeordnet, der über einen Klemmring 32 mit der oberen Behälterkante verbunden ist. Weiterhin ist der Fülltrichter 31 im Einfüllbereich mit einem Sieb 33 versehen, das die Grobteile aussiebt und Verletzungen durch das Rührwerk verhindert.

## Patentansprüche

1. Vorrichtung zum Dosieren von Schüttgütern mit einer Austragsvorrichtung und einem Vorratsbehälter mit einem Vertikalrührwerk, das von unten angetrieben wird, **dadurch gekennzeichnet, daß** im Vorratsbehälter (9) eine stationäre Ummantelung (14) vorgesehen ist, in der eine Antriebswelle (15) für das Rührwerk (2) gelagert ist und daß die Ummantelung (14) bis mindestens in den oberen Bereich des Vorratsbehälters (9) ragt.

2. Vorrichtung nach Anspruch 1, **dadurch gekennzeichnet, daß** die Ummantelung (14) als Rohrstumpf ausgebildet ist, der am Behälterboden befestigt und in der ein oberer Antriebswellenteil (15) gelagert ist, wobei an dessen Drehdurchführung (22) eine Rührwerkslagerung vorgesehen ist.

3. Vorrichtung nach Anspruch 2, **dadurch gekennzeichnet, daß** im Bereich der Drehdurchführung (22) um die Antriebswelle (15) eine Abdichthaube (24) vorgesehen ist, die nach unten die Ummantelung (14) überlappt.

4. Vorrichtung nach Anspruch 3, **dadurch gekennzeichnet, daß** die Abdeckhaube (24) nach unten offen und soweit erweitert ist, daß zwischen der Außenwand der Ummantelung (14) und der Innenwand der Abdeckhaube (24) ein Ringspalt (26) verbleibt.

5. Vorrichtung nach Anspruch 4, **dadurch gekennzeichnet, daß** im Ringspalt (26) ein Dichtelement (25) angeordnet ist, das ein Wellenlager (21) zum Innenraum des Vorratsbehälters (9) abdichtet und so angeordnet ist, daß es nicht vom Schüttgutdruck beaufschlagt wird.

6. Vorrichtung nach Anspruch 5, **dadurch gekennzeichnet, daß** das Dichtelement (25) als Wellendichtring ausgebildet ist, der aus einem trockenlaufgeeigneten Dichtungsmaterial besteht.

7. Vorrichtung nach Anspruch 5 oder 6, **dadurch gekennzeichnet, daß** der Ringspalt (26) unterhalb des Dichtelements (25) so ausgebildet ist, daß die Schüttgutpartikel selbsttätig nach unten in den Vorratsbehälter (9) gefördert werden.

8. Vorrichtung nach einem der Ansprüche 4 bis 7, **dadurch gekennzeichnet, daß** im Ringspalt (26) ein Rückfördergewinde (27) vorgesehen ist, dessen Gewindegänge entgegen der Drehrichtung des Rührwerks (2) verlaufen.

9. Vorrichtung nach einem der Ansprüche 3-9, **dadurch gekennzeichnet, daß** die Drehdurchführung (22) des oberen Antriebswellenteils (15) als Paßstück (23) oder Gewindestück ausgebildet ist, das den Rührflügel (10, 11) kraftschlüssig mit der Welle (15) verbindet und wobei im verbundenen Rührflügelteil (11) eine entsprechende Paß- oder Gewindebohrung vorgesehen ist.

10. Vorrichtung nach einem der Ansprüche 3-9, **dadurch gekennzeichnet, daß** oberhalb der Abdichthaube (24) ein Klemmstück (29) vorgesehen ist, das mit der Antriebswelle (15) verbunden ist und zur Fixierung des Rührwerksflügels (10, 11) sowie zum Schutz der Antriebswelle (15) dient.

11. Vorrichtung nach einem der vorhergehenden Ansprüche, **dadurch gekennzeichnet, daß** die Antriebswelle (15) mehrteilig ausgebildet ist und unterhalb des Vorratsbehälters (9) eine lösbare Steckverbindung (13) zum Antriebsmotor (6) bildet.

12. Vorrichtung nach einem der vorhergehenden Ansprüche, **dadurch gekennzeichnet, daß** mindestens zwei voneinander lösbare Baueinheiten vorgesehen sind, die aus mindestens einer Antriebseinheit (3) und einer Behältereinheit (1) bestehen.

13. Vorrichtung nach einem der vorhergehenden Ansprüche, **dadurch gekennzeichnet, daß** oberhalb des Vorratsbehälters (9) ein Fülltrichter (31) mit einem Einfüllsieb (33) vorgesehen ist.

## Claims

1. Device for metering bulk materials with a discharge device and a storage container with a vertical agitating mechanism which is driven from below, **characterised in that** a stationary casing (14) is provided in the storage container (9), in which casing a drive shaft (15) for the agitating mechanism (2) is mounted, and that the casing (14) projects at least into the upper region of the storage container (9).

2. Device according to Claim 1, **characterised in that** the casing (14) is formed as a tube stub which is fastened to the container bottom and in which an upper drive shaft part (15) is mounted, on the rotary transmission member (22) of which an agitating mechanism mounting is provided.

3. Device according to Claim 2, **characterised in that** a sealing hood (24) is provided around the drive shaft (15) in the region of the rotary transmission member (22), which hood overlaps the casing (14) in the downward direction.

4. Device according to Claim 3, **characterised in that** the sealing hood (24) is open and widened in the downward direction to an extent such that an annular gap (26) remains between the outer wall of the casing (14) and the inner wall of the sealing hood (24).

5. Device according to Claim 4, **characterised in that** a sealing element (25) is disposed in the annular gap (26), which element seals a shaft bearing (21) with respect to the interior of the storage container (9) and is disposed so that it is not acted upon by the pressure of the bulk materials.

6. Device according to Claim 5, **characterised in that** the sealing element (25) is formed as a shaft sealing ring which consists of a sealing material which is suitable for dry running.

7. Device according to Claim 5 or 6, **characterised in that** the annular gap (26) is formed below the sealing element (25) so that the bulk material particles are automatically conveyed downwards into the storage container (9).

8. Device according to any one of Claims 4 to 7, **characterised in that** a return screw thread (27) is provided in the annular gap (26), the thread turns of which extend opposite to the direction of rotation of the agitating mechanism (2).

9. Device according to any one of Claims 3 to 9, **characterised in that** the rotary transmission member (22) of the upper drive shaft part (15) is formed as an adapter piece (23) or a threaded piece which connects the agitating vane (10, 11) in force-transmitting manner to the shaft (15), and wherein a corresponding adapter hole or threaded hole is provided in the connected agitating vane part (11).

10. Device according to any one of Claims 3 to 9, **characterised in that** a clamping piece (29) is provided above the sealing hood (24), which clamping piece is connected to the drive shaft (15) and serves to fix the agitating mechanism blade (10, 11) as well as to protect the drive shaft (15).

11. Device according to any one of the preceding Claims, **characterised in that** the drive shaft (15) is of multipart formation and forms a releasable plug-in connection (13) to the drive motor (6) below the storage container (9).

12. Device according to any one of the preceding Claims, **characterised in that** at least two structural units which can be disconnected from one another are provided, these consisting of at least one drive unit (3) and one container unit (1).

13. Device according to any one of the preceding Claims, **characterised in that** a filling hopper (31) with a filling sieve (33) is provided above the storage container (9).

## Revendications

1. Dispositif de dosage de produits en vrac, comportant un équipement de délivrance et un réservoir d'approvisionnement pourvu d'un agitateur vertical entraîné par dessous, **caractérisé en ce qu'**une gaine stationnaire (14) est prévue dans le réservoir d'approvisionnement (9), dans laquelle est monté un arbre d'entraînement (15) pour l'agitateur (2) et **en ce que** la gaine (14) atteint au moins la zone supérieure du réservoir d'approvisionnement (9).

2. Dispositif selon la revendication 1, **caractérisé en ce que** la gaine (14) est constituée par un tronçon de tube qui est fixé au fond du réservoir et dans lequel est montée une partie supérieure de l'arbre d'entraînement (15), un palier de l'agitateur étant prévu sur sa traversée tournante (22).

3. Dispositif selon la revendication 2, **caractérisé en ce qu'**un capuchon d'étanchéité (24) est prévu dans la zone de la traversée tournante (22) autour de l'arbre d'entraînement (15) qui recouvre la gaine (14) vers le bas.

4. Dispositif selon la revendication 3, **caractérisé en ce que** le capuchon de recouvrement (24) est ouvert vers le bas et élargi de façon à ménager un intervalle annulaire entre la paroi extérieure de la gaine (14) et la paroi intérieure du capuchon de recouvrement (24).

5. Dispositif selon la revendication 4, **caractérisé en ce qu'**un élément d'étanchéité (25) est disposé dans l'intervalle annulaire (26), qui étanche un palier (21) de l'arbre par rapport au réservoir d'approvisionnement (9) et qui est disposé de façon à ne pas être en contact avec le produit en vrac.

6. Dispositif selon la revendication 5, **caractérisé en ce que** l'élément d'étanchéité (25) est réalisé sous forme d'un joint torique d'arbre constitué d'un matériau d'étanchéité approprié pour la marche à sec.

7. Dispositif selon la revendication 5 ou 6, **caractérisé en ce que** l'intervalle annulaire (26) est réalisé, au-dessous de l'élément d'étanchéité, de façon que les particules de produit en vrac soient automatiquement entraînées vers le bas dans le réservoir d'approvisionnement (9).

8. Dispositif selon l'une des revendications 4 à 7, **caractérisé en ce qu'**un filetage d'entraînement inversé (27) est prévu dans l'intervalle annulaire (26), dont le pas est orienté à l'opposé du sens de rotation de l'agitateur (2).

9. Dispositif selon l'une des revendications 3 à 9, **caractérisé en ce que** la traversée tournante (22) de la partie supérieure de l'arbre (15) est réalisée en tant que partie d'ajustage (23) ou comme partie filetée qui relie rigidement l'ailette d'agitateur (10, 11) à l'arbre (15), un perçage d'ajustage ou un taraudage correspondant étant prévu dans l'ailette d'agitateur (11) reliée.

10. Dispositif selon l'une des revendications 3 à 9, **caractérisé en ce qu'**un élément de blocage est prévu au-dessus du capuchon d'étanchéité (24), qui est relié à l'arbre d'entraînement (15) et sert à la fixation de l'ailette d'agitateur (10, 11) ainsi qu'à la protection de l'arbre d'entraînement (15).

11. Dispositif selon l'une des revendications précédentes, **caractérisé en ce que** l'arbre d'entraînement (15) est réalisé en plusieurs parties et forme, au-dessous du réservoir d'approvisionnement (9), une liaison par enfichage amovible (16) avec le moteur d'entraînement (6).

12. Dispositif selon l'une des revendications précédentes, **caractérisé en ce qu'**au moins deux constituants pouvant être séparés l'un de l'autre sont prévus qui sont constitués par au moins une unité d'entraînement (3) et une unité de réservoir (1).

13. Dispositif selon l'une des revendications précédentes, **caractérisé en ce qu'**au-dessus du réservoir d'approvisionnement (9) est disposé une trémie de remplissage (31) avec un tamis de remplissage (33).
